# EUROPEAN PATENT APPLICATION

(11) **EP 3 249 521 A1**
(43) Date of publication of application: **29.11.2017**
(21) Application number: 17171548.5
(22) Date of filing: 17.05.2017
(51) Int. Cl.: G06F 9/44, G06F 9/50, G06F 9/445, G05B 19/418

(54) **COMPUTING APPARATUS AND OPERATING METHOD THEREOF**

(30) Priority: 24.05.2016 KR 20160063554
(71) Applicant: LSIS Co., Ltd., Gyeonggi-Do 14119 (KR)
(72) Inventor: LEE, SEOK CHAN, 14118 Gyeonggi-do (KR); LEE, SEUNG JU, 14118 Gyeonggi-do (KR); YOON, YEO CHANG, 14118 Gyeonggi-do (KR); KONG, SHIN JO, 14118 Gyeonggi-do (KR); BAE, AE KYOUNG, 14118 Gyeonggi-do (KR); YUN, JANG HYEOK, 14118 Gyeonggi-do (KR); WHANG, HO YOUNG, 14118 Gyeonggi-do (KR)
(74) Representative: Zacco Sweden AB

(57) **Abstract**

Disclosed is a computing apparatus, which comprises a plug-in profile (110) configured to store a plurality of target source codes that are modularized to perform functions applied to a target device that operates based on a platform; a profile extractor (120) configured to extract at least one target source code out of the plurality of target source codes, based on operating information of the target device; and a platform applying unit (140) configured to combine the extracted at least one target source code on the platform.

## Description

### BACKGROUND

The present invention relates to a computing apparatus and operating method thereof. And, more particularly, the present invention relates to a computing apparatus and operating method thereof, capable of automatically configuring functions of target devices that configure a SCADA system using a plug-in scheme.

A SCADA system (Supervising Control And Data Acquisition system) may have various target devices depending on domains, sites and customers, for examples, an EMS(Energy Management System), a DMS(Data Management System), a PAS(Power Amplifier System) and an OMS(Outage Management System).

Such a target device may be configured of programs performing a variety of functions such as a graphic editor, a graphic viewer, a file distribution tool, a database manager, an alarm, and an engineering tool, and its configuration may be different according to domains/sites/customers.

Further, specific functions of the individual programs may also be different from one another according to domains/sites/customer.

The computing apparatus may generate a set of entire source codes corresponding to current target devices on a platform in order to configure the target devices, and then add or change detailed functions needed in the corresponding target devices so as to use them.

In the computing apparatus, a developer selects functions needed in the specific target device based on the domain knowledge on the basis of the platform so as to configure products. The computing apparatus may modify and use the source codes for the products by copying the codes for each product to be matched to the corresponding target device. Operations of an identical function may be different a little bit from one another according to the sites/customers. In this case, source codes of the corresponding function may be directly modified and used.

Since the computing apparatus copies and uses several sets of common elements for each product, which are identical regardless of kinds of the product and are basis of the SCADA system, it may be difficult to manage the codes and to modularize them perfectly. In case that the common elements (common portions) are modified; the modification should be manually applied to all products. Further, while there is a case that identical functions should operate differently from one another according to domains/sites/customers, this case is not easy to deal with.

Recently, in the process of adding or changing detailed functions, studies to modularize the detailed functions configuring the target devices and combine them on the platform in the plug-in scheme are under way.

### SUMMARY

It is an objective of the present invention to provide a computing apparatus and operating method thereof, capable of automatically configuring functions of target devices that configures an SCADA system using a plug-in scheme.

In accordance with a first embodiment of the present invention, there is provided a computing apparatus, which comprises a plug-in profile configured to store a plurality of target source codes that are modularized to perform functions applied to a target device that operates based on a platform; a profile extractor configured to extract at least one target source code out of the plurality of target source codes, based on operating information of the target device; and a platform applying unit configured to combine the extracted at least one target source code on the platform.

In accordance with another embodiment of the present invention, there is provided an operating method of a computing apparatus, which comprises allowing a profile extractor to determine whether at least one target source code of a plurality of target source codes corresponding to operating information of a target device is stored in a plug-in profile, when the operating information of the target device is inputted; allowing the profile extractor to extract the at least one target source code when it is determined that the at least one target source code is stored; and allowing a platform applying unit to combine the extracted at least one target source code on a platform of the target device.

A computing apparatus and operating method thereof in accordance with the present invention enables target source codes which are different from one another and modularized to be combined on a corresponding platform so that detailed functions applied to each of a plurality of target devices that configure a SCADA system, thereby saving code management and maintenance costs and easily handling the case that identical functions operate differently from one another.

### BRIEF DESCRIPTION OF THE DRAWINGS

FIG. 1 is a control block diagram illustrating a control configuration of a computing apparatus in accordance with the present invention.
FIG. 2 is a diagram briefly illustrating a platform combined in a computing apparatus in accordance with the present invention.
FIG. 3 is a flowchart illustrating an operating method of a computing apparatus in accordance with the present invention.

### DETAILED DESCRIPTION OF THE EMBODIMENTS

Hereinafter, principles of the present invention are simply illustrated. Therefore, although not clearly described and illustrated in the specification, the principles of the present invention are embodied and various devices included ideas and scopes of the present invention are invented by those skilled in the art. Further, it should be understood that all conditional terms and embodiments listed in the specification are intended in principle only for the purpose of understanding ideas of the present invention, and are not limited to the embodiments and states that are specially listed above.

Further, it should be understood that all detailed descriptions listing a specific embodiment of the present invention as well as principles, perspectives and embodiments of the present invention are intended to include structural and functional equivalents of such matters. Further, it should be understood that those equivalents include all elements invented to perform the same function regardless of equivalents to be developed in the future as well as currently known equivalents, that is, structures.

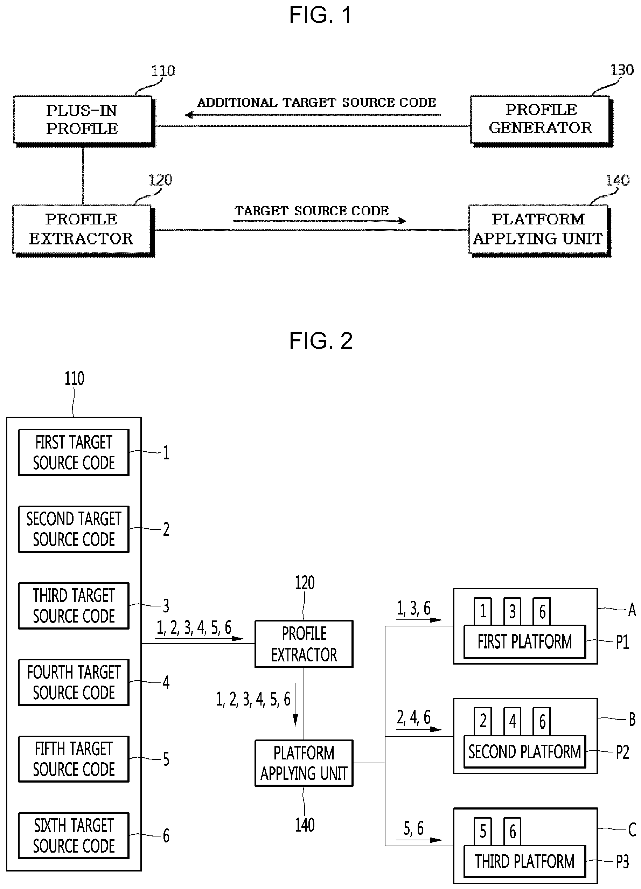

FIG. 1 is a control block diagram illustrating a control configuration of a computing apparatus in accordance with the present invention.

Referring to FIG. 1, the computing apparatus may include
a plug-in profile 110, a profile extractor 120, a profile generator 130 and a platform applying unit 140.

In an embodiment, the computing apparatus may be used by a manufacturer manufacturing a plurality of target devices or a monitoring operator, wherein the plurality of target devices are applied to a SCADA system, operated based on a platform, and capable of inserting and storing functional programs of an EMS, a DMS, a PAS and an OMS, for example, which is not limited thereto.

Here, the plurality of target devices may be configured of programs that perform a variety of functions such as a graphic editor, a graphic viewer, a file distribution tool, a database manager, an alarm and an engineering tool, which is not limited thereto.

The plug-in profile 110 may store a plurality of target source codes which are modularized, which correspond to the functions of the plurality of programs.

Here, the plug-in profile 110 may also store an additional target source code generated in a profile generator 130 to be described, which is not limited thereto.

In the embodiment, while the plug-in profile 110 is illustrated and described as a control block included in the computing apparatus, it may communicate with the computing apparatus as a separate server device, which is not limited thereto.

The profile extractor 120 may extract an arbitrary target source code for a relevant function from the plurality of target source codes stored in the plug-in profile 110 based on the operating information on each of the plurality of target devices.

For example, when an arbitrary target device among the plurality of target devices is an EMS(Energy Management System), the profile extractor 120 may extract first and second target source codes corresponding to a single line diagram search and D/L search, which is detailed functions, from the plug-in profile 110, when applying a graphic editor program.

As described above, the profile extractor 120 may extract an arbitrary target source code among the plurality of target source codes stored in the plug-in profile 110 based on operating information on an arbitrary target device among the plurality of target devices.

If the arbitrary target source code corresponding to an additional function for detailed functions applied to the arbitrary target device is not stored in the plug-in profile 110, the profile extractor 120 may request the profile generator 130 to generate a profile.

When the profile generator 130 receives a profile generation request from the profile extractor 120, the request being made for the additional function for the arbitrary target device, it may generate the additional target source code for the additional function to store the code in the plug-in profile 110.

In the embodiment, the profile generator 130 may generate the additional target source code by a user or a manager, which is not limited thereto.

The platform applying unit 140 may combine at least one of the arbitrary target source code and the additional target source code extracted from the profile extractor 120 on the platform for the arbitrary target device.

FIG. 2 is a diagram briefly illustrating a platform combined in a computing apparatus in accordance with the present invention.

Referring to FIG. 2, the computing apparatus may combine arbitrary target source codes (1, 2, 3, 4, 5 and 6) on first to third platforms P1, P2 and P3 for first to third target devices A, B and C, respectively.

That is, the profile extractor 120 may extract the first, third and sixth target source codes (1, 3 and 6) from the plug-in profile 110, based on operating information including kind information and usage information of the first target device A.

Here, the platform applying unit 140 may combine the first, third and sixth target source codes (1, 3 and 6) extracted from the profile extractor 120 on the first platform P1 of the first target device A.

In the same way described above, the profile extractor 120 may extract the second, fourth and fifth target source codes (2, 4 and 5) from the plug-in profile 110, based on the operating information including kind information and usage information of the second target device B.

Here, the platform applying unit 140 may combine the second, fourth and fifth target source codes (2, 4 and 5) extracted from the profile extractor 120 on the second platform P2 of the second target device B.

Further, the profile extractor 120 may extract the fifth and sixth target source codes (5 and 6) from the plug-in profile 110, based on operating information on kind information and usage information of the third target device C.

Here, the platform applying unit 140 may combine the fifth and sixth target source codes (5 and 6) extracted from the profile extractor 120 on the third platform P3 of the third target device C.

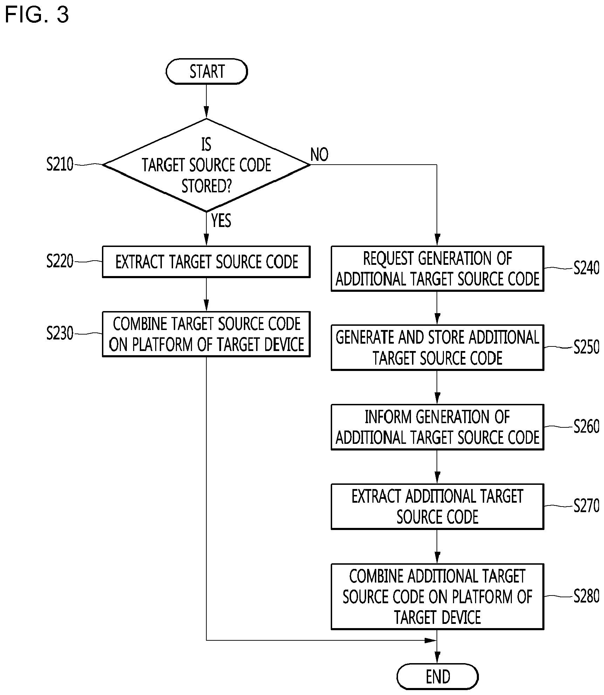

FIG. 3 is a flowchart illustrating an operating method of a computing apparatus in accordance with the present invention.

Referring to FIG. 3, a profile extractor 120 of a computing apparatus may determine whether a plug-in profile 110 stores an arbitrary target source code for detailed functions applied to an arbitrary target device when the profile extractor 120 receives operating information on the arbitrary target device (S210).

When the profile extractor 120 determines that the arbitrary target source code is stored, it may extract the arbitrary target source code to be transferred to the platform applying unit 140 (S220).

The platform applying unit 140 may combine the arbitrary target source code extracted from the profile extractor 120 on the platform of the arbitrary target device (S230).

Here, the arbitrary target source code may be combined on a common platform to be applied thereto.

After step (S210), when the profile extractor 120 determines that the arbitrary target source code is not stored, it may request the profile generator 130 to generate an additional target source code for an additional function (S240).

When the profile generator 130 is requested to generate the additional target source code, it generates the additional target source code to store it in the plug-in profile 110 (S250) and informs the profile extractor 120 of a generation of the additional target source code (S260).

When the profile extractor 120 receives information on the generation of the additional target source code from the profile generator 130, it may extract the additional target source code stored in the plug-in profile 110 and transfer it to the platform applying unit (S270).

The platform applying unit 140 may combine the additional target source code on the platform of the arbitrary target device (S280).

Although the present invention was illustrated and described with reference to preferred embodiments, it is not limited to a specific embodiment described above. The present invention may be changed and modified in various ways, without departing from the ideas and technical regions described in claims, by those skilled in the art. Accordingly, technical scope of the present invention is not restricted to the detailed description but should be defined by claims only.

## Claims

1. A computing apparatus, comprising:
a plug-in profile (110) configured to store a plurality of target source codes that are modularized to perform functions applied to a target device that operates based on a platform;
a profile extractor (120) configured to extract at least one target source code out of the plurality of target source codes, based on operating information of the target device; and
a platform applying unit (140) configured to combine the extracted at least one target source code on the platform.

2. The computing apparatus of claim 1, wherein the plug-in profile stores common source codes for essential functions that apply to the target device.

3. The computing apparatus of claim 1, wherein the at least one target source code is used to perform an additional function in a function program applied to the target device.

4. The computing apparatus of claim 1, wherein the operating information includes at least one of kind information and usage information of the target device.

5. The computing apparatus of claim 1, further comprising:
a profile generator (130) configured to generate additional target source codes for additional functions of the target device that are not stored in the plug-in profile, to store in the plug-in profile.

6. The computing apparatus of claim 5, wherein the profile generator generates the additional target source codes when a profile generation request to request the additional function for an arbitrary target device is inputted from the profile extractor.

7. The computing apparatus of claim 5, wherein the target device include an Energy Management System, EMS, a Data Management System, DMS, a Power Amplifier System, PAS, and an Outage Management System, OMS.

8. An operating method of a computing apparatus, comprising:
allowing a profile extractor to determine (S210) whether at least one target source code of a plurality of target source codes corresponding to operating information of a target device is stored in a plug-in profile, when the operating information of the target device is inputted;
allowing the profile extractor to extract (S220) the at least one target source code when it is determined that the at least one target source code is stored; and
allowing a platform applying unit to combine (S230) the extracted at least one target source code on a platform of the target device.

9. The operating method of claim 8, further comprising:
allowing the profile extractor to request (S240) a profile generator to generate an additional target source code, when the profile extractor determines that the at least one target source code is not stored in the plug-in profile;
allowing the profile generator to generate (S250) the additional target source code to be stored in the plug-in profile; and
allowing information on a generation of the additional target source code to be outputted (S260) to the profile extractor, after the additional target source code has been stored in the plug-in profile.

10. The operating method of claim 9, further comprising:
allowing the profile extractor to extract (S270) the additional target source code from a profile generator and transfer the additional target source code to the platform applying unit, when the profile extractor receives the information on the generation of the additional target source code.

11. The operating method of claim 10, further comprising:
allowing the platform applying unit to combine (S280) the additional target source code on the platform.
